(19) Europäisches Patentamt
European Patent Office
Office européen des brevets

(11) **EP 3 060 950 B1**

## (12) EUROPEAN PATENT SPECIFICATION

(45) Date of publication and mention
of the grant of the patent:
**26.08.2020 Bulletin 2020/35**

(21) Application number: **14799255.6**

(22) Date of filing: **20.10.2014**

(51) Int Cl.:
**G02B 6/43** *(2006.01)*

(86) International application number:
**PCT/US2014/061285**

(87) International publication number:
**WO 2015/061185 (30.04.2015 Gazette 2015/17)**

(54) **FLEXIBLE GLASS OPTICAL WAVEGUIDE STRUCTURES**

OPTISCHE WELLENLEITERSTRUKTUREN AUS FLEXIBLEM GLAS

STRUCTURES DE GUIDE D'ONDES OPTIQUE EN VERRE SOUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2013 US 201361894139 P**

(43) Date of publication of application:
**31.08.2016 Bulletin 2016/35**

(73) Proprietor: **Corning Incorporated
Corning, New York 14831 (US)**

(72) Inventors:
• **GARNER, Sean Matthew
Elmira, New York 14905 (US)**

• **LI, Ming-Jun
Horseheads, New York 14845 (US)**

(74) Representative: **Sturm, Christoph
Quermann - Sturm - Weilnau
Patentanwälte Partnerschaft mbB
Unter den Eichen 5
65195 Wiesbaden (DE)**

(56) References cited:
**EP-A2- 1 286 194       WO-A2-2007/127191
US-A1- 2005 220 393     US-A1- 2012 224 804**

## Description

This application claims the benefit of priority under 35 U.S.C. § 119 of U.S. Provisional Application Serial No. 61/894139, filed on October 22, 2013.

## FIELD

The present disclosure relates to optical waveguides and, more particularly, to flexible glass optical waveguide structures and devices formed therefrom.

## BACKGROUND

As the performance of microprocessors continues to increase, electrical interconnects for data flow to and from processors can increasingly become a bottleneck for overall system performance. Replacing electronic interconnects with optical interconnects can provide a higher bandwidth-length product and higher density.

Flexible optical waveguide interconnects can provide an important component in optical interconnection technology for optically connected mediation systems (e.g., board-to-board or chip-to-chip interconnections). Polymer-based flexible optical waveguides have been proposed as short distance interconnects. However, the polymers may not be suitable for high temperature processes. Accordingly, there remains a need for flexible waveguides and devices for optical interconnect applications.

US 2005/220393 A1 is directed to a flexible active signal cable that includes a flexible printed circuit substrate and two flexible optical waveguides, among other components. The flexible optical waveguides are affixed to the flexible printed circuit substrate.

WO 2007/127191 A2 is directed to a substrate product for use in the manufacture of flexible electronic panels. The flexible electronic panels can encompass such electronic products as radio frequency identification tags, photovoltaics, printable electronics, as well as other flexible products.

US 2012/224804 A1 is directed to a semiconductor device and a method of manufacturing the same for performing input and output by optical signals.

EP 1 286 194 A1 discloses a device showing the features of the preamble of claim 1. EP 1 286 194 A1 discloses that an optical waveguide sheet can be formed of any material that is sufficiently transparent to propagating light, such as glass, semiconductor, and organic material. For example, a glass substrate, a single-crystal substrate of lithium niobate, a semiconductor substrate of Si or GaAs, an organic sheet, or the like can be used as the optical waveguide sheet.

## SUMMARY

The invention provides a device according to claim 1.

One technique to improve optical waveguide interconnects is to provide a flexible glass optical waveguide. The flexible glass optical waveguide includes a substrate that is formed of an ultra-thin flexible glass having a thickness of no more than about 0.3 mm, which can also support relatively high temperatures (e.g., greater than 250 °C) that is suitable for printed circuit board (PCB) processing.

Additional features and advantages will be set forth in the detailed description which follows, and in part will be readily apparent to those skilled in the art from the description or recognized by practicing the disclosure as exemplified in the written description and the appended drawings. It is to be understood that both the foregoing general description and the following detailed description are merely exemplary of the disclosure, and are intended to provide an overview or framework to understanding the nature and character of the disclosure as it is claimed.

The accompanying drawings are included to provide a further understanding of principles of the disclosure, and are incorporated in and constitute a part of this specification. The drawings illustrate one or more embodiment(s), and together with the description serve to explain, by way of example, principles and operation of the disclosure. It is to be understood that various features of the disclosure disclosed in this specification and in the drawings can be used in any and all combinations. By way of non-limiting example the various features of the disclosure may be combined with one another according to the following aspects.

According to a first aspect of the disclosure, not covered by the invention, an optical waveguide device comprises:

a flexible glass optical waveguide structure comprising a flexible glass substrate having a thickness of no greater than about 0.3 mm, the flexible glass substrate having at least one waveguide feature that transmits optical signals through the flexible glass substrate, the at least one waveguide feature being formed of glass material that forms the flexible glass substrate; and
an electrical device located on a surface of the flexible glass substrate.

According to a second aspect, there is provided the optical waveguide device of aspect 1, wherein an intermediate substrate connects the electrical device to the surface of the flexible glass substrate.

According to a third aspect, there is provided the optical waveguide device of aspect 1, wherein the electrical device is formed directly on the surface of the flexible glass substrate.

According to a fourth aspect, there is provided the optical waveguide device of any of aspects 1-3, wherein the electrical device is a first device, the optical waveguide device further comprising a second device located on the surface of the flexible glass substrate.

According to a fifth aspect, there is provided the optical waveguide device of aspect 4, wherein the second device is an optical device, the optical waveguide device comprising an electrical connection carried by the flexible glass optical waveguide structure that sends electric signals between the first and second devices.

According to a sixth aspect, there is provided the optical waveguide device of any of aspects 1-5, wherein the electrical device is a first device, the optical waveguide device further comprising a second device located on an opposite surface of the flexible glass substrate.

According to a seventh aspect, there is provided the optical waveguide device of aspect 6, wherein the second device is an optical device, the optical waveguide device comprising an electrical connection carried by the flexible glass optical waveguide structure that sends electric signals between the first and second devices.

According to an eighth aspect, there is provided the optical waveguide device of aspect 7, wherein the electrical connection extends through the flexible glass substrate.

According to a ninth aspect, there is provided the optical waveguide device of any of aspects 1-8, wherein the at least one waveguide feature is at least partially bounded by surrounding glass material of the flexible glass substrate.

According to a tenth aspect, there is provided the optical waveguide device of any of aspects 1-9, comprising multiple waveguide features that transmit optical signals through the flexible glass substrate.

According to an eleventh aspect, there is provided the optical waveguide device of any of aspects 1-10, wherein the at least one waveguide feature is at least partially buried within the flexible glass substrate.

According to a twelfth aspect, there is provided the optical waveguide device of aspect 11, wherein the flexible glass substrate has opposite broad surfaces, the at least one waveguide feature intersecting at least one of the broad surfaces.

According to a thirteenth aspect, there is provided the optical waveguide device of aspect 11, wherein the at least one waveguide feature is buried within the flexible glass substrate such that at least a portion of the at least one waveguide feature is spaced from both the broad surfaces.

According to a fourteenth aspect, there is provided the optical waveguide device of any of aspects 1-13, further comprising a polymer layer that coats a broad surface of the flexible glass substrate.

According to a fifteenth aspect, there is provided the optical waveguide device of any of aspects 1-14, wherein the at least one waveguide feature has a width of no more than about 100 μm.

According to a sixteenth aspect of the disclosure, covered by the invention, a device assembly comprises:

a substrate;
a first device connected to the substrate, where the first device is an electrical device;
a second device connected to the substrate; and
a flexible glass optical waveguide structure that optically connects the first and second devices, the flexible glass optical waveguide comprising a flexible glass substrate having a thickness of no greater than about 0.3 mm, the flexible glass substrate having at least one waveguide feature that transmits optical signals through the flexible glass substrate between the first and second optical devices, the at least one waveguide feature being formed of glass material that forms the flexible glass substrate.

According to a seventeenth aspect, there is provided the device assembly of aspect 16, wherein the first device is located on one broad surface of the substrate and the second device is located on an opposite surface of the substrate.

According to a eighteenth aspect, there is provided the device assembly of aspect 16 or 17, wherein the substrate has an opening extending through a thickness of the substrate, the flexible glass optical waveguide structure extending through the opening.

According to a nineteenth aspect, there is provided the device assembly of any one of aspects 16-18, wherein the flexible glass optical waveguide structure has a portion extending contiguously with the substrate.

According to a twentieth aspect, there is provided the optical structure of any one of aspects 16-19, wherein the flexible glass optical waveguide structure has a portion spaced from the substrate.

According to a twenty-first aspect, there is provided the optical structure of any one of aspects 16-20, wherein the second device is an optical device.

According to a twenty-second aspect, there is provided the optical structure of any one of aspects 16-21, wherein the substrate is formed of multiple layers, the flexible glass optical waveguide structure at least partially extending between the multiple layers of the substrate.

According to a twenty-third aspect of the disclosure, not covered by the invention, an optical waveguide device comprises:

a flexible glass optical waveguide structure comprising a flexible glass substrate having a thickness of no greater than about 0.3 mm, the flexible glass substrate having at least one waveguide feature that transmits optical signals through the flexible glass substrate, the at least one waveguide feature being formed of glass material that forms the flexible glass substrate; and

an electrical device and/or an optical device at least partially buried within the flexible glass substrate.

According to a twenty-fourth aspect, there is provided the optical waveguide device of aspect 23, wherein the electrical and/or optical device is a first device, the electrical and/or optical device comprising a second device carried by the flexible glass substrate.

According to a twenty-fifth aspect, there is provided the optical waveguide device of aspect 24, comprising an electrical connection carried by the flexible glass optical waveguide structure that carries electric signals between the first and second devices.

**BRIEF DESCRIPTION OF THE DRAWINGS**

These and other features, aspects and advantages of the present disclosure are better understood when the following detailed description of the disclosure is read with reference to the accompanying drawings, in which:

FIG. 1 illustrates an embodiment of a flexible glass optical waveguide structure in accordance with aspects of the disclosure;

FIG. 2 illustrates schematically an embodiment of a process and apparatus for forming a flexible glass optical waveguide structure in accordance with aspects of the disclosure;

FIG. 3 illustrates an embodiment of a flexible glass optical waveguide structure in accordance with aspects of the disclosure;

FIG. 4 illustrates an embodiment of a flexible glass optical waveguide structure in accordance with aspects of the disclosure;

FIG. 5 illustrates a comparative embodiment of an optical waveguide device including a flexible glass optical waveguide structure in accordance with aspects of the disclosure;

FIG. 6 illustrates another comparative embodiment of an optical waveguide device including a flexible glass optical waveguide structure in accordance with aspects of the disclosure;

FIG. 7 illustrates another comparative embodiment of an optical waveguide device including a flexible glass optical waveguide in accordance with aspects of the disclosure;

FIG. 8 illustrates operation of another comparative embodiment of an optical waveguide device including a flexible glass optical waveguide structure in accordance with aspects of the disclosure;

FIG. 9 illustrates a comparative embodiment of a device assembly including a flexible glass optical waveguide structure in accordance with aspects of the disclosure;

FIG. 10 illustrates another comparative embodiment of a device assembly including a flexible glass optical waveguide structure in accordance with aspects of the disclosure;

FIG. 11 illustrates another comparative embodiment of a device assembly including a flexible glass optical waveguide structure in accordance with aspects of the disclosure;

FIG. 12 illustrates another comparative embodiment of a device assembly including a flexible glass optical waveguide structure in accordance with aspects of the disclosure;

FIG. 13 illustrates another comparative embodiment of a device assembly including a flexible glass optical waveguide structure in accordance with aspects of the disclosure;

FIG. 14 illustrates an inventive embodiment of a device assembly including a flexible glass optical waveguide structure in accordance with aspects of the disclosure;

FIG. 15 illustrates another comparative embodiment of a device assembly including a flexible glass optical waveguide structure in accordance with aspects of the disclosure;

FIG. 16 illustrates another embodiment of a device assembly including a flexible glass optical waveguide structure in accordance with aspects of the disclosure;

FIG. 17 illustrates an embodiment of a waveguide feature for a flexible glass optical waveguide structure in accordance with aspects of the disclosure;

FIG. 18 illustrates another embodiment of a waveguide feature for a flexible glass optical waveguide structure in accordance with aspects of the disclosure;

FIG. 19 illustrates another embodiment of a waveguide feature for a flexible glass optical waveguide structure in accordance with aspects of the disclosure; and

FIG. 20 illustrates another embodiment of a waveguide feature for a flexible glass optical waveguide structure in accordance with aspects of the disclosure.

**DETAILED DESCRIPTION**

In the following detailed description, for purposes of explanation and not limitation, example embodiments disclosing specific details are set forth to provide a thorough understanding of various principles of the present disclosure. However, it will be apparent to one having ordinary skill in the art, having had the benefit of the present disclosure, that the present disclosure may be practiced in other embodiments that depart from the specific details disclosed herein. Moreover, descriptions of well-known devices, methods and materials may be omitted so as not to obscure the description of various principles of the present disclosure. Finally, wherever applicable, like reference numerals refer to like elements.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the singular forms "a," "an" and "the" include plural referents unless the context clearly dictates otherwise. Thus, for example, reference to a "component" includes aspects having two or more such components, unless the context clearly indicates otherwise.

Embodiments described herein generally relate to flexible glass optical waveguide structures and devices that are formed using a flexible glass substrate. One or more waveguide features can be carried by the flexible glass substrate and the waveguide features may be formed of glass forming the flexible glass substrate such that they are also flexible. The waveguide features may be exposed at (i.e., intersect) or located near a surface of the flexible glass substrate or the waveguide features may be buried within the flexible glass substrate, or a combination thereof. In some embodiments, the waveguide features form part of the surface of the flexible glass substrate. The flexible glass substrate can support relatively high temperatures (e.g., greater than 250 °C) that are suitable for printed circuit board (PCB) processing, while the flexibility of the flexible glass substrate facilitates connection of various electrical and/or optical components.

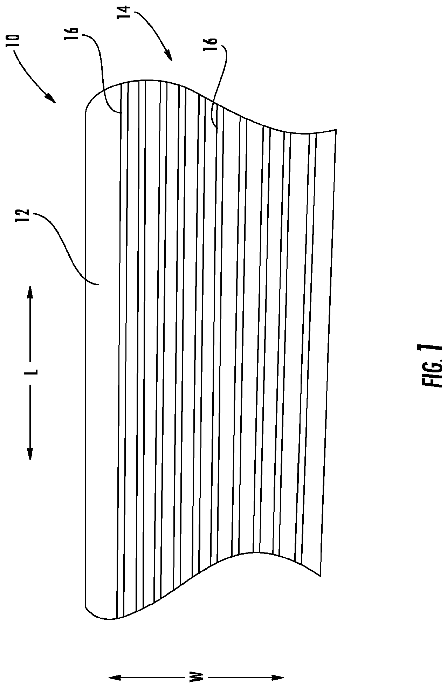

Referring to FIG. 1, a flexible glass optical waveguide structure 10 has a width W and a length L and includes a flexible glass substrate 12 and an array 14 of waveguide features 16 extending along the length of the flexible glass substrate 12 for transmitting optical signals there through. The waveguide features 16 may be discrete formations that are at least partially or completely bounded about their perimeters by the surrounding glass material of the flexible glass substrate 12. The flexible glass substrate 12 may be thin (e.g., less than about 0.5 mm, such as less than about 0.3 mm), which can be advantageous over polymer substrates for higher processing temperatures, nearly zero birefringence (less than about ten nm in retardation) and neutral color.

The flexible glass substrate 12 may have any suitable length L (e.g., between about 1 cm to several meters), a width W (e.g., between about 1 mm to 10 cm) and a thickness of about 0.3 mm or less including but not limited to thicknesses of, for example, about 0.01-0.05 mm, about 0.05-0.1 mm, about 0.1-0.15 mm, about 0.15-0.3 mm, 0.3, 0.275, 0.25, 0.225, 0.2, 0.19, 0.18, 0.17, 0.16, 0.15, 0.14, 0.13, 0.12, 0.11, 0.10, 0.09, 0.08 0.07, 0.06, 0.05, 0.04, 0.03, 0.02, or 0.01 mm. The flexible glass substrate 12 may be formed of glass, a glass ceramic, a ceramic material or composites thereof. In some embodiments, the flexible glass substrate including the waveguide features may have a bend radius of at least about 100 mm. A fusion process (e.g., downdraw process) that forms high quality flexible glass sheets can be used in a variety of devices and one such application is flat panel displays. Glass sheets produced in a fusion process have surfaces with superior flatness and smoothness when compared to glass sheets produced by other methods. The fusion process is described in U.S. Patent Serial Nos. 3,338,696 and 3,682,609. Other suitable glass sheet forming methods include a float process, updraw and slot draw methods.

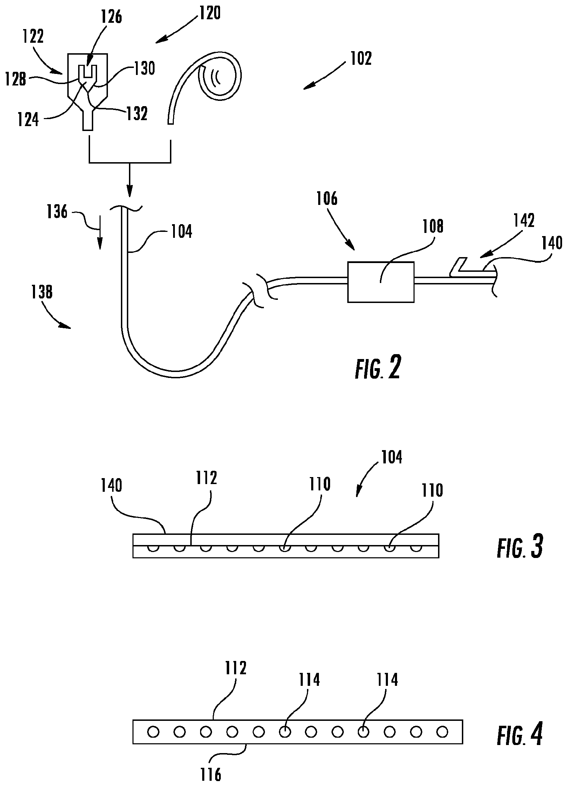

Methods of manufacturing flexible glass optical waveguide structures 10 will now be described. FIG. 2 represents steps of example methods with the understanding that the illustrated steps may be carried out in a different order unless otherwise noted. Moreover, additional steps may be provided that are not illustrated unless otherwise stated. As shown in FIG. 2, the method can optionally begin with a step 102 of obtaining the flexible glass substrate 104 having a thickness of about 300 $\mu$m or less, such as about 200 $\mu$m or less, such as about 100 $\mu$m or less, such as about 50 $\mu$m or less. The flexible glass substrate 104 can be provided with glass selected from various families of glass including soda lime glass, borosilicate and alkaline earth boroaluminosilicate although other glass compositions may be used in further examples. Additionally, the flexible glass substrate can be formed of either a single layer or multiple layers of a glass or glass ceramic material.

At step 106, the flexible glass substrate 104 may be provided to a waveguide forming station 108 where one or more waveguide features (FIG. 1) are formed in the flexible glass substrate 104. The waveguide forming station 108 may form the waveguide features in the flexible glass substrate using any suitable process, such as ion exchange, laser inscription or any other suitable process or combination of processes. These features can be formed while the glass substrate is part of a continuous flexible glass web, or after it has been cut into discrete sections. The waveguide features can be formed single mode or multi-mode (e.g., depending at least in part on the size of the waveguide features). A relative refractive index change is used to describe refractive index increase between the waveguide features (i.e., waveguide core) and surrounding glass cladding by the waveguide forming process:

$$\Delta = ((n_1^2 - n_2^2)/2n_2^2)$$

where, n1 and n2 are the refractive indices of the waveguide core and cladding, respectively. The $\Delta$ value of the waveguide features may be between about 0.1 and 10 percent The index profile of the waveguide features can be a step-like profile or a graded profile. In some embodiments, the width or diameter of the waveguides may be between about 2 $\mu$m and 100 $\mu$m.

FIG. 2, for example, illustrates two example sources 120 for obtaining flexible glass substrate 104, although other sources may be provided. For instance, the source 120 can include a down draw glass forming apparatus 122. As schematically shown, the down draw glass forming apparatus 122 can include a forming wedge 124 at a bottom of a trough 126 , wherein glass flows down opposite sides 128 and 130 of the forming wedge 124. The two sheets of molten glass are subsequently fused together as they are drawn off root 132 of the forming wedge 124. As such, the flexible glass substrate 104, in the form of a flexible glass ribbon, may be fusion drawn to traverse in a downward direction 136, off the root 132 of the forming wedge 124 and directly into a downward zone 138 positioned downstream of the down draw glass forming apparatus. After forming, the flexible glass substrate 104 may be further processed, such as by cutting, trimming, etc. The flexible glass substrate 104, in the form of the continuous flexible glass ribbon may then be provided to the waveguide forming station 108.

Referring to FIG. 3, waveguide features 110 may be formed at a broad surface 112 of the flexible glass substrate 104. In these embodiments, the waveguide features 110 may have semicircular or semi-elliptical cross sectional shapes, or some other suitable shape. Referring to FIG. 4, waveguide features 114 may be at least partially buried within the flexible glass substrate 104, spaced from both broad surfaces 112 and 116. In these embodiments, the waveguide features 114 may have circular or elliptical cross sectional shapes, or some other suitable shape. Additionally, while the waveguide features are illustrated as being parallel, other arrangements are possible, which will be described in greater detail below (i.e., the waveguide features may extend in any or a combination of lengthwise, widthwise and/or thickness directions). For parallel waveguide features, the waveguide widthwise spacing or pitch may be between about 15 $\mu$m and 100 $\mu$m, such as between about

20 $\mu$m, 30 $\mu$m, 40 $\mu$m and 50 $\mu$m to reduce crosstalk between neighboring waveguide features. Unlike circular optical fiber, the number of waveguide features in a planar flexible glass substrate can be scaled in the width dimension. A larger number of waveguide features can be provided by a single flexible glass substrate (e.g., 4 or more, 8 or more, 10 or more, 16 or more, 20 or more, 24 or more, 48 or more, 96 or more, 100 or more, 124 or more, 150 or more, 200 or more, 300 or more, etc.). To protect the waveguide features, such as shown by FIG. 3 at the surface 112, a coating material 140 may be applied at step 142.

The flexible glass optical waveguide structures can be a single layer of flexible glass substrate or a multi-layer composite, including multiple flexible glass substrates and/or different materials, such as non-glass materials. Individual layers of the flexible glass optical waveguide structures can be chosen specifically to perform optical, mechanical and/or electrical functions. For example, a polymeric coating can be applied to one or both surfaces 112 and 116 (FIGS. 2 and 3) to serve as optical, mechanical and/or electrical layers.

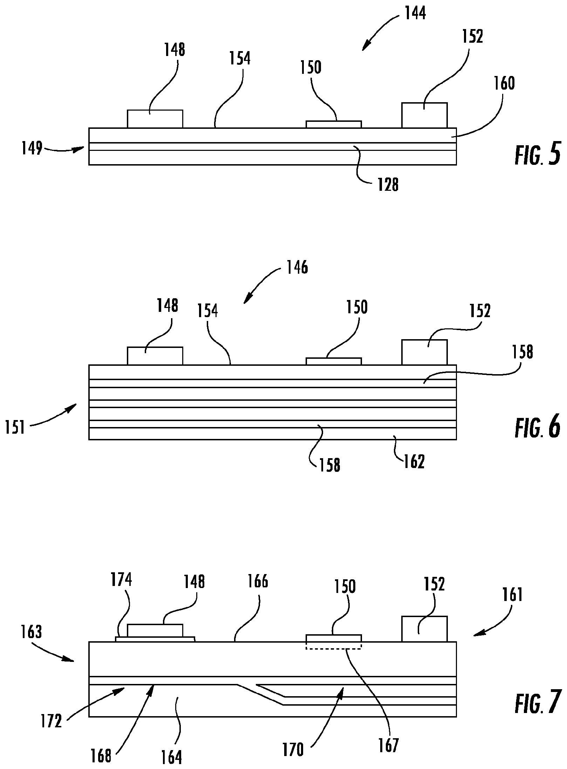

Referring to FIGS. 5 and 6, schematic, simplified views of optical waveguide devices 144 and 146 are illustrated that include flexible glass optical waveguide structure 149 and 151. Both the optical waveguide devices 144 and 146 include their own electrical, optical and/or opto-electrical devices 148, 150 and 152 located on a surface 154 and 158 of their respective flexible optical waveguide structures 149 and 151. As used herein, the term "optical device" includes optical and opto-electrical devices. In FIG. 5, a single waveguide feature 158 is illustrated that is buried within a flexible glass substrate 160. In FIG. 6, multiple waveguide features 158 are illustrated that are buried within a flexible glass substrate 162. While the waveguide features 158 are illustrated at different thickness levels within the flexible glass substrate 160, the waveguide features 158 may be arranged at different width locations within the flexible glass substrate 160 (see FIGS. 3 and 4).

Referring to FIG. 7, an optical waveguide device 161 is illustrated including a flexible glass optical waveguide structure 163. The flexible glass optical waveguide structure 163 includes a flexible glass substrate 164 having devices 148, 150 and 152 located on a surface 166 thereof. In this embodiment, a waveguide feature 168 is buried within the flexible glass substrate 164 that has a waveguide portion 170 that splits from a waveguide portion 172 in a vertical or thickness direction. Such an arrangement can allow for splitting (or combining) optical signals within the waveguide feature 168.

The devices 148, 150 and 152 can be integrated onto the surface 166 in any suitable fashion, such as by connecting the device 148 to the surface 166 using an intermediate substrate 174. In some embodiments, one or more of the devices 148, 150 and 152 may be at least partially or completely buried within the flexible glass substrate 164 as represented by dashed line 167. In some embodiments, the device 150 may be built directly on the surface 166 (e.g., by a deposition process). For example, silicon may be used in building an active device on the surface 166 of the flexible glass optical waveguide structure 163. Such an arrangement can allow for formation of lasers, optical detectors and optical modulators on the flexible glass optical waveguide structure 163. Electrical components such as electrical vias, conductor traces or electrical components can also exist on the flexible glass optical waveguide structure 163. For example, hole formation and metal filling may be used to facilitate placement and use of electrical components. Conductor trace patterning and pick-and-place features may also be provided.

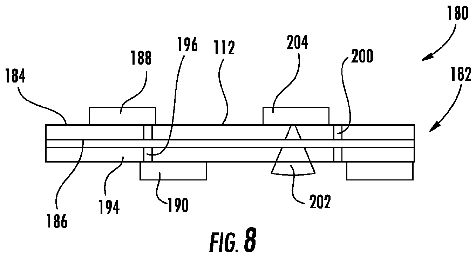

FIG. 8 illustrates schematically operation of an exemplary optical waveguide device 180 that includes a flexible glass optical waveguide structure 182 formed of a flexible glass substrate 184 having a waveguide feature 186 extending therethrough. In this example, electrical and/or opto-electrical devices 188 and 190 are illustrated on opposite surfaces 192 and 194 of the flexible glass optical waveguide structure 182. As indicated above, the devices 188 and 190 may be formed separately and attached to the flexible glass optical waveguide structure 182 or they may be built directly on the surfaces 192 and 194, or some combination thereof. Use of the flexible glass substrate 184 can facilitate interaction between the various devices located thereon and even to separate devices located elsewhere (e.g., on a nearby PCB). For example, an electrical interconnect 196 may provide an electrical connection between the devices 188 and 190 to allow communication therebetween with the devices 188 and 190 at opposite surfaces 192 and 194 of the flexible glass optical waveguide structure 182. While the electrical interconnect 196 is illustrated as extending through the thickness of the flexible glass substrate 184 in a direction generally perpendicular to surfaces 192 and 194, the electrical interconnect 196 can extend in any of thickness, lengthwise and/or widthwise directions. Additionally, optical and physical properties of the flexible glass substrate 184 can be utilized to facilitate optical interaction between devices. For example, a through hole 200 or other passageway may be formed through the flexible glass substrate 184. Such a hole 200 can allow for passage of conductor traces or other electrical or optical connections between the surfaces 192 and 194. Such holes 200 may also serve as alignment features to facilitate a pick-and-place operation. As another example, the optical properties of the flexible glass substrate 184 can allow optical interaction through the flexible glass substrate 184 as represented by light beam 202 from device 204. In some embodiments, the devices may interact with optical signals provided by the waveguide features.

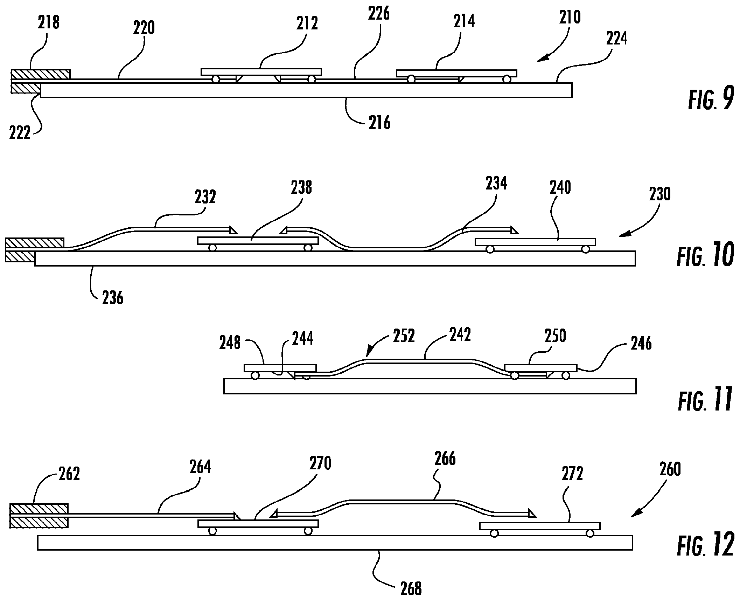

FIGS. 9-15 illustrate exemplary interconnect options for parallel optical links utilizing one or more flexible glass optical waveguide structures. Referring first to FIG. 9, a device assembly 210 includes devices 212 and 214 (e.g., optical or electro-optical devices) that are attached to a substrate 216 (e.g., a PCB). An optical connector 218 (e.g., a ferrule) optically connects a flexible glass optical waveguide structure 220 to, for example, an array of optical fibers of an optical fiber cable that deliver optical signals to the device assembly 210. In this example, the optical connector 218 is connected to an edge 222 of the substrate 216 and the flexible glass optical waveguide structure 220 extends along and may be connected to and extend contiguously with a surface 224 of the substrate 216. The flexible glass optical waveguide structure 220 is also optically connected to device 212. Another flexible glass optical waveguide structure 226 extends along and may be connected to and extend contiguously with the surface 224 of the substrate 216 to connect the devices 212 and 214. FIG. 10 illustrates an alternative example of a device assembly 230 where flexible glass optical waveguide structures 232 and 234 are both on and off of substrate 236 to facilitate optical connection to devices 238 and 240 at locations spaced from the substrate 236. FIG. 11 illustrates another example where a flexible glass optical waveguide structure 242 is connected to substrate facing surfaces 244 and 246 of devices 248 and 250, yet a central portion 252 of the flexible glass optical waveguide structure 242 is spaced from substrate 254. Referring to FIG. 12, another example of a device assembly 260 includes an off substrate arrangement where optical connector 262 and flexible glass optical waveguide structures 264 and 266 are spaced from substrate 268 and optically connected to devices 270 and 272.

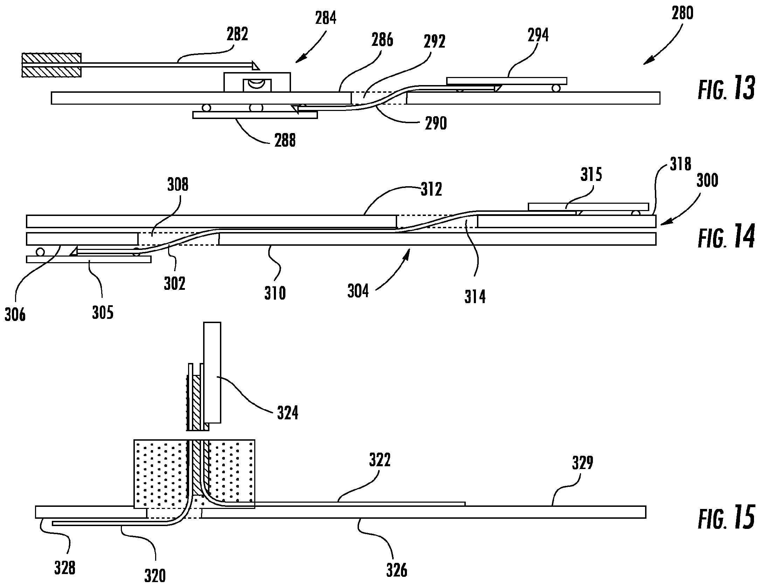

Not only can the above-described flexible glass optical waveguide structures facilitate optical connections on a single side of a substrate, they can also facilitate optical connections between opposite sides of the substrate. For example, referring to FIG. 13, another example of a device assembly 280 includes a flexible glass optical waveguide structure 282 that delivers optical signals to a lens array 284, which delivers the optical signals through a substrate 286 to an optical device 288 that receives the optical signals and, in turn, delivers optical signals to another flexible glass optical waveguide structure 290. As can be seen, the flexibility of the flexible glass optical waveguide structure 290 allows the flexible glass optical waveguide structure 290 to be routed through an opening 292 in the substrate 286. The flexible glass optical waveguide structure 290 is also optically connected with an optical device 294 that receives the optical signals from the flexible glass optical waveguide structure 290. FIG. 14 illustrates an alternative embodiment of a device assembly 300 having a flexible glass optical waveguide structure 302 that is at least partially encapsulated within a multi-layer substrate 304. The flexible glass optical waveguide structure 302 is routed from optical device 305 and surface 306 and through an opening 308 that extends through only layer 310. The flexible glass optical waveguide structure 302 is then routed between the layer 310 and layer 312 and then through another opening 314 that extends only through layer 312 to allow an optical connection with optical device 315 located at an opposite surface 318 of the substrate 304. Flexible glass optical waveguide structures 320 and 322 can also facilitate connection between substrates 324 and 326 having non-parallel arrangements and provide access to either or both surfaces 328 and 329 the substrate 326 (and/or substrate 324) as shown by FIG. 15.

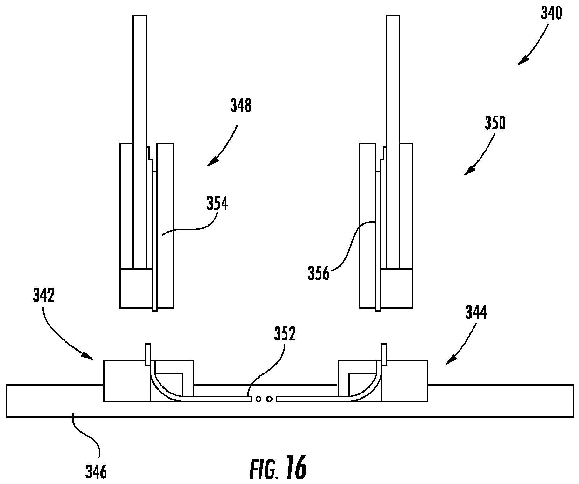

Referring to FIG. 16, the above-described flexible glass optical waveguide structures can facilitate pluggable connections between devices. An exemplary pluggable optical board interconnection system 340 is shown by FIG. 16. Optical adapters 342 and 344 may be connected to a backplane board 346 that are each configured to releasably receive optical board assemblies 348 and 350. A flexible glass optical waveguide structure 352 is provided that extends on or within the backplane board turning perpendicular into the optical adapters 342 and 344 to optically couple to waveguides 354 and 356 carried by the optical board assemblies 348 and 350 to allow optical communications therebetween.

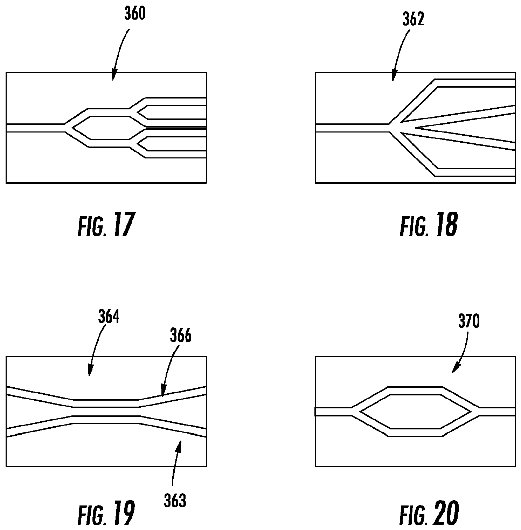

While many of the flexible glass optical waveguide structures described above illustrate parallel waveguide features (FIG. 1), other arrangements are possible. For example, FIG. 17 illustrates a Y-branch waveguide feature 360 that can be used for splitting optical signals from one waveguide portion into multiple waveguide portions or combine optical signals from multiple waveguide portions into one waveguide portion if used reversely. FIG. 18 illustrates a star-coupler waveguide arrangement 362 for performing splitting/combining functions. FIG. 19 illustrates a directional coupler arrangement 364 for coupling optical signals from one waveguide feature 366 to another waveguide feature 368. FIG. 20 illustrates a Mach-Zehnder interferometer arrangement 370 for signal processing.

The above-described flexible glass optical waveguide structures can facilitate a variety of connection arrangements of different optical components due to the flexibility of the flexible glass substrate. A large number of waveguide features (e.g., hundreds) can be formed in the flexible glass substrate. The flexible glass optical waveguide structures can support device forming temperatures of several hundred degrees Celsius, which is suitable for high temperature PCB processing. The flexible glass substrates can be compatible with via hole processing and electronic component assembly to enable full integration between optical and electrical components. The flexible glass optical waveguide structures can enable efficient fiber end-face coupling. The waveguide features can be formed at one or both surfaces, as well as buried internally within the flexible glass substrate. Optical and electronic active components can be integrated using the flexible glass optical waveguide structures.

**Claims**

1. A device comprising:

   a flexible glass optical waveguide structure (302) comprising a flexible glass substrate (12, 104) having a thickness of no greater than about 0.3 mm, the flexible glass substrate (12, 104) having at least one waveguide feature (16, 110, 114) that transmits optical signals through the flexible glass substrate (12, 104), the at least one waveguide feature (16, 110, 114) being formed of glass material that forms the flexible glass substrate (12, 104); and
   a first electro-optical device (305) connected to a substrate (304), and a second optical or electro-optical device (315) connected to the substrate (304), wherein the flexible glass optical waveguide structure (302) optically connects the first and second devices, **characterized in that** the substrate (304) is formed of multiple layers (310, 312), the flexible glass optical waveguide structure (302) at least partially extending between the multiple layers (310, 312) of the substrate (304).

2. The device of claim 1, wherein the at least one waveguide feature (16, 110, 114) is at least partially bounded by surrounding glass material of the flexible glass substrate (12, 104).

3. The device of any one of claims 1-2 comprising multiple waveguide features (16, 110, 114) that transmit optical signals through the flexible glass substrate (12, 104).

4. The device of any one of claims 1-3, wherein the at least one waveguide feature (16, 110, 114) is at least partially buried within the flexible glass substrate (12, 104).

5. The device of claim 4, wherein the flexible glass substrate (104) has opposite broad surfaces (112, 116), the at least one waveguide feature (110, 114) intersecting at least one of the broad surfaces (112, 116).

6. The device of any one of claims 1-5 further comprising a polymer layer that coats a broad surface (112, 116) of the flexible glass substrate (104).

7. The device of any one of claims 1-6, wherein the substrate (304) has an opening (308, 314) extending through a thickness of the substrate (304), the flexible glass optical waveguide structure (302) extending through the opening (308).

8. The device of any one of claims 1-7, wherein the flexible glass optical waveguide structure (302) has a portion extending contiguously with the substrate (304).

9. The device of any one of claims 1-8, wherein the flexible glass optical waveguide structure (302) has a portion spaced from the substrate (304).

**Patentansprüche**

1. Vorrichtung, umfassend:

eine optische Wellenleiterstruktur aus flexiblem Glas (302), umfassend ein flexibles Glassubstrat (12, 104) mit einer Dicke von nicht mehr als etwa 0,3 mm, wobei das flexible Glassubstrat (12, 104) mindestens ein Wellenleitermerkmal (16, 110, 114) aufweist, welches optische Signale durch das flexible Glassubstrat (12, 104) hindurch überträgt, wobei das mindestens eine Wellenleitermerkmal (16, 110, 114) aus Glasmaterial gebildet ist, welches das flexible Glassubstrat (12, 104) bildet; und
eine erste elektrooptische Vorrichtung (305), die mit einem Substrat (304) verbunden ist, und eine zweite optische oder elektrooptische Vorrichtung (315), die mit dem Substrat (304) verbunden ist, wobei die optische Wellenleiterstruktur aus flexiblem Glas (302) die erste und die zweite Vorrichtung optisch verbindet, **dadurch gekennzeichnet, dass** das Substrat (304) aus mehreren Schichten (310, 312) gebildet ist, wobei die optische Wellenleiterstruktur aus flexiblem Glas (302) sich mindestens teilweise zwischen den mehreren Schichten (310, 312) des Substrats (304) erstreckt.

2. Vorrichtung nach Anspruch 1, wobei das mindestens eine Wellenleitermerkmal (16, 110, 114) mindestens teilweise durch umgebendes Glasmaterial des flexiblen Glassubstrats (12, 104) eingegrenzt wird.

3. Vorrichtung nach einem der Ansprüche 1 bis 2, umfassend mehrere Wellenleitermerkmale (16, 110, 114), die optische Signale durch das flexible Glassubstrat (12, 104) hindurch übertragen.

4. Vorrichtung nach einem der Ansprüche 1 bis 3, wobei das mindestens eine Wellenleitermerkmal (16, 110, 114) mindestens teilweise in dem flexiblen Glassubstrat (12, 104) eingegraben ist.

5. Vorrichtung nach Anspruch 4, wobei das flexible Glassubstrat (104) gegenüber liegende breite Oberflächen (112, 116) aufweist, wobei das mindestens eine Wellenleitermerkmal (110, 114) mindestens eine der breiten Oberflächen (112, 116) kreuzt.

6. Vorrichtung nach einem der Ansprüche 1 bis 5, des Weiteren umfassend eine Polymerschicht, die eine breite Oberfläche (112, 116) des flexiblen Glassubstrats (104) beschichtet.

7. Vorrichtung nach einem der Ansprüche 1 bis 6, wobei das Substrat (304) eine Öffnung (308, 314) aufweist, die sich durch eine Dicke des Substrats (304) hindurch erstreckt, wobei die optische Wellenleiterstruktur aus flexiblem Glas (302) sich durch die Öffnung (308) hindurch erstreckt.

8. Vorrichtung nach einem der Ansprüche 1 bis 7, wobei die optische Wellenleiterstruktur aus flexiblem Glas (302) einen Abschnitt aufweist, der sich angrenzend an das Substrat (304) erstreckt.

9. Vorrichtung nach einem der Ansprüche 1 bis 8, wobei die optische Wellenleiterstruktur aus flexiblem Glas (302) einen Abschnitt aufweist, der von dem Substrat (304) beabstandet ist.

**Revendications**

1. Dispositif comprenant :

une structure de guide d'ondes optiques en verre souple (302) comprenant un substrat de verre souple (12, 104) ayant une épaisseur ne dépassant pas environ 0,3 mm, le substrat de verre souple (12, 104) ayant au moins un élément guide d'ondes (16, 110, 114) qui transmet des signaux optiques à travers le substrat de verre souple (12, 104), l'au moins un élément guide d'ondes (16, 110, 114) étant constitué d'un matériau vitreux qui forme le substrat de verre souple (12, 104) ; et
un premier dispositif électro-optique (305) relié à un substrat (304), et un deuxième dispositif optique ou électro-optique (315) relié au substrat (304), la structure de guide d'ondes optiques en verre souple (302) reliant optiquement les premier et deuxième dispositifs, **caractérisé en ce que** le substrat (304) est constitué de multiples couches (310, 312), la structure de guide d'ondes optiques en verre souple (302) s'étendant au moins partiellement entre les multiples couches (310, 312) du substrat (304).

2. Dispositif de la revendication 1, dans lequel l'au moins un élément guide d'ondes (16, 110, 114) est au moins partiellement délimité par le matériau vitreux environnant du substrat de verre souple (12, 104).

3. Dispositif de l'une quelconque des revendications 1 et 2 comprenant de multiples éléments guides d'ondes (16, 110, 114) qui transmettent des signaux optiques à travers le substrat de verre souple (12, 104).

4. Dispositif de l'une quelconque des revendications 1 à 3, dans lequel l'au moins un élément guide d'ondes (16, 110, 114) est au moins partiellement enfoui à l'intérieur du substrat de verre souple (12, 104).

5. Dispositif de la revendication 4, dans lequel le substrat de verre souple (104) a de grandes surfaces opposées (112, 116), l'au moins un élément guide d'ondes (110, 114) croisant au moins une des grandes surfaces (112, 116).

6. Dispositif de l'une quelconque des revendications 1 à 5 comprenant en outre une couche de polymère qui recouvre une grande surface (112, 116) du substrat de verre souple (104).

7. Dispositif de l'une quelconque des revendications 1 à 6, dans lequel le substrat (304) a une ouverture (308, 314) s'étendant à travers une épaisseur du substrat (304), la structure de guide d'ondes optiques en verre souple (302) s'étendant à travers l'ouverture (308).

8. Dispositif de l'une quelconque des revendications 1 à 7, dans lequel la structure de guide d'ondes optiques en verre souple (302) a une partie s'étendant de façon contiguë au substrat (304).

9. Dispositif de l'une quelconque des revendications 1 à 8, dans lequel la structure de guide d'ondes optiques en verre souple (302) a une partie espacée du substrat (304) .

FIG. 1

*FIG. 2*

*FIG. 3*

*FIG. 4*

FIG. 5

FIG. 6

FIG. 7

FIG. 8

FIG. 9

FIG. 10

FIG. 11

FIG. 12

FIG. 13

FIG. 14

FIG. 15

FIG. 16

360

FIG. 17

362

FIG. 18

364

366

FIG. 19    363

370

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61894139
- US 2005220393 A1
- WO 2007127191 A2
- US 2012224804 A1
- EP 1286194 A1
- US 3338696 A
- US 3682609 A